# EUROPEAN PATENT APPLICATION

(11) **EP 4 105 070 A1**
(43) Date of publication of application: **21.12.2022**
(21) Application number: 21179350.0
(22) Date of filing: 14.06.2021
(51) Int. Cl.: B60L 58/26, B60L 58/27, B60L 53/302

(54) **METHOD AND DEVICE FOR CHARGING AN ELECTRIC VEHICLE**

(71) Applicant: Volvo Car Corporation, 40531 Göteborg (SE)
(72) Inventor: Almkvist, Göran, 443 31 Lerum (SE); Björkholtz, Jonas, 442 72 Kärna (SE)
(74) Representative: Nederlandsch Octrooibureau

(57) **Abstract**

The invention relates to a method of charging an electric vehicle (3), comprising:
- providing an external charging unit (5) and an external cooling unit (7),
- connecting a battery power inlet (27) on the vehicle (3) to the charging unit (5) via a power cable (25),
- connecting a heat exchange connector (20,21) of a heat exchanger (22) of the vehicle (3) to the external cooling unit (7) via a heat exchange duct (15,16),
- supplying a cooling medium from a coolant tank (9) of the external cooling unit (7) to the vehicle (3) while providing a high level power input via the power cable (25) during a peak charging time interval t_{pc}, and
- supplying a cooling medium from a heat pump (10) to the heat exchange connector (20,21) while providing a second level power input via the power cable (25), that is lower than the first level during a subsequent charging time interval t_{sc} following on the peak charging time interval.

## Description

### Technical Field

The invention relates to a method of charging an electric vehicle, comprising:
- providing an external charging unit and an external cooling unit,
- connecting a battery power inlet on the vehicle to the charging unit via a power cable,
- connecting a heat exchange connector of the vehicle to the external cooling unit via a heat exchange duct,
- supplying a cooling medium from a coolant tank of the external cooling unit to the vehicle and providing a high level power input via the power cable.

The invention also relates to a charging station for fast charging of an electric vehicle.

### Background Art

Fast charging of electric vehicles at roadside charging stations is often limited by the battery temperature, that rises during charging. Often, especially in cold environments, the battery needs to be preheated at the start of the charging cycle.

It is known to provide a charging station with an external thermal conditioning system with hot and cold reservoirs that connect to an on board heat exchanger, for instance through a connector at the bottom of the vehicle, while the power connector supplies DC power via a cable to the lithium-ion cells of the battery. When 300 kW of power is delivered to an electric vehicle during 6-12 minutes of charging a 30 kWh electric vehicle battery, up to about 50 kW of heat may be expected to be generated. The known hot and cold reservoirs are provided with heating and cooling units to provide the heat exchange medium contained in the reservoirs at the required temperature.

### Summary of the Invention

It is an object of the invention to provide an efficient method of fast charging an electric vehicle. It is another object to provide a charging station with an external thermal conditioning system that is versatile and that can be relatively easily installed and at low cost.

The charging method according to the invention comprises:
- supplying a cooling medium from a coolant tank of the external cooling unit to the vehicle while providing a high level power input via the power cable during a peak charging time interval t_{pc}, and
- supplying a cooling medium via a heat pump to the heat exchange connector while providing a second level power input via the power cable, that is lower than the first level during a subsequent charging time interval t_{sc} following on the peak charging time interval.

By providing the cooling medium from the coolant tank during the peak charging time, it is possible to charge the battery at high power, such as at least 300 kW, while removing the 30 kW or more of heat that is generated during a time interval t_{pc} of 1-5 min. Directly following, in the subsequent charging time t_{sc}, the charging power is lowered, such as for instance to 250 kW or less, and cooling is provided by the heat pump during a time of 2-10 min.

Using the cooling power of the coolant that is stored in the tank during the peak charging at high power, and using the heat pump for cooling during the subsequent charging at lower power, an efficient off-vehicle cooling system is provided using relatively little cooling power. The cooling system according to the invention may be comprised of a stand-alone heat pump and compact tanks which are relatively easy to install in an existing charging infrastructure.

After completion of one or more charging cycles, the cooling medium in the coolant tank can be cooled by the heat pump to regain its low cooling temperature. The heat may be transferred to a hot storage tank for pre-heating of the battery when charging, especially at low battery temperatures, such as occur in relatively cold climates and low power driving.

The power supplied during the peak charging time interval t_{pc} may be at least 300kW, preferably at least 500 kW, and the power supplied during the subsequent charging time interval t_{sc} is lower than 300kW.

The cooling medium in the coolant tank can have a cooling power of at least 2.5 kWh, at a temperature of at least -10°C, preferably at least -20°C, more preferably at least -30°C, which cooling is supplied during a peak charging time t_{pc} of 1 min < t_{pc} < 5 min. This charging cycle is particularly suitable for a typically 100kWh battery.

The method according to the invention can charge a 100kWh battery with 80% SOC in a time of 10 minutes to get an over 300 km range (at a power consumption of 200Wh/km).

The cooling tank according to the invention may comprise between 25 I and 500 I, preferably between 25 I and 100 I of water and cooling substance, such as glycol, and is of a relatively small size.

In an embodiment of the method according to the invention, wherein during the subsequent charging time interval t_{sc} of 2< t_{sc} <10 min, the heat pump supplies a cooling power of at least 10 kW, preferably at least 20 kW.

A 6 kW heat pump with a coefficient of performance (COP) of 4 can produce 24kW of cooling power and 4kWh of energy, which can balance a charge to 60kWh at a charging rate of 500kW.

A charging station for charging an electric vehicle according to the invention may comprise:
- an electric charging unit with an electrical connector for connecting to a battery of an electric vehicle;
- a coolant connector for connecting a cooling unit to the cooling system of the battery of an electric vehicle; and
- a cooling unit comprising a cold storage tank, a hot storage tank and a heat pump, the hot and cold storage tanks being connectable to the battery cooling system via the coolant connector, the heat pump being connected to the each storage tank and arranged to transfer heat from the cold storage tank to the hot storage tank.

The cold storage tank may comprise 10-1001 of cooling medium.

An embodiment of a charging station according to the invention comprises two electric charging units, each with an electrical cable and a connector adapted to supply a power of 250kW at 400V.

Another embodiment of a charging station according to the invention comprises a control unit adapted for:
- supplying a cooling medium from the cold storage tank to a heat exchange unit of the vehicle while providing a high level of power via the electrical cable during a peak charging time interval tpc;
- supplying a cooling medium from the heat pump to the heat exchange unit of the vehicle while providing a second level of power via the electrical cable that is lower than the first level during a subsequent charging interval tsc following on the peak charging time interval; and
- cooling of the cooling medium in the cold storage tank after completion of one or more charging cycles by the heat pump.

A charging station according to the invention may comprise a hot storage tank in heat exchanging connection with the heat pump for providing a heat exchange medium from the hot storage tank to the heat exchange connector when a battery temperature is below a predetermined threshold.

The charging station may provide typically between 400V to 800V on the electrical charging cable and connector or may alternatively comprise two electric chargers, each with an electrical cable and connector adapted to supply a power of 250kW at 400V. The two cables may be used either independently in case no cooling system is provided and can be used jointly to provide rapid charging when used in combination with the cooling system according to the invention.

### Brief description of the Drawings

An embodiment of a charging method and a charging station for fast charging of an electric vehicle in accordance with the invention, will by way of non-limiting example be described in detail with reference to the accompanying drawings. In the drawings:
Fig. 1 shows a schematic view of a charging station for carrying out the charging method according to the invention, and
Fig. 2 shows graphs of the charging power, the battery temperature and the total energy supplied in a charging method according to the invention.

### Detailed Description of the Invention

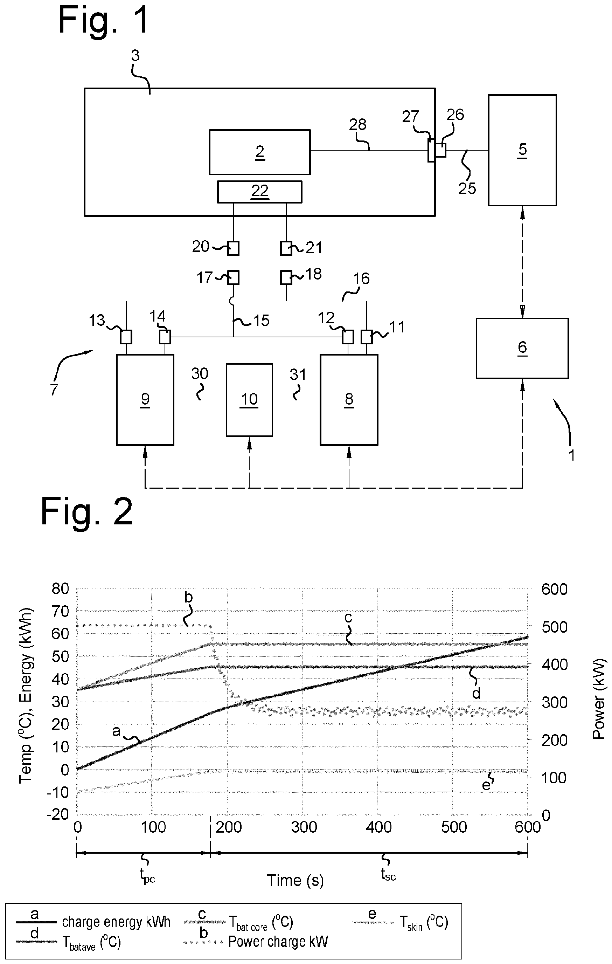

Fig. 1 shows a charging station 1 for charging of a battery 2 of an electric vehicle 3. The charging station 1 comprises a DC electrical charging unit 5, a controller 6 and an external temperature control unit 7.

The temperature control unit 7 comprises a hot storage tank 8, a cold storage tank 9 and a heat pump 10. The heat pump 10 is connected to the tanks 8, 9 through a thermal connection 30, 31. This thermal connection comprises a heat exchanger between the gas/liquid working medium in the heat pump 10 and the heat exchange liquids in the cold and hot storage tanks 8,9. In this case, the cold tank acts as the "evaporator" and the hot tank as the "condenser" of the heat transfer system 8,9,10.

The storage tanks 8, 9 are provided with valves 11,12, 13 and 14 and are connected via ducts 15,16 and connectors 17, 18 to complementary connectors 20,21 of a heat exchanger 22 on the vehicle 2.

The electrical charging unit 5 is attached via an electrical cable 25 with a connector 26 located at its end, to a complementary connector 27 on the vehicle 3, that is attached to the battery 2 via a conductor 28. The electrical cable 25 and connectors 26, 27 are laid out for charging at 800 V, 500 kW. The charging unit 5 may be provided with two electrical cables 25, each having a connector 26. An electric vehicle 3 that is provided with two complementary connectors 27 can be charged at twice 400 V, 250kW of charging power, using both charging cables.

When the battery 2 of the vehicle 3 needs to be recharged, the vehicle is driven to the charging station 1 and the connector 26 of the charging unit 5 is connected to the complementary connector 27 on the vehicle 3. The connectors 17, 18 of the temperature control unit 7 are connected to the connectors 20,21 of the heat exchanger 22 on the vehicle 3, such that a heat exchange fluid can be circulated from the hot or cold storage tanks 8,9 through the heat exchanger 22. The connectors 20,21 may in one embodiment be placed at the bottom of the vehicle 3 and the connectors 17,18 may be provided with an actuating mechanism that automatically connects with the connectors 20,21 at the bottom, when the vehicle is driven into a charging position.

When charging, the controller 6 controls the power that is supplied by the charging unit 5 and the supply of coolant from the cold storage tank 9 or the hot heat exchange fluid from hot storage tank 8. The controller 6 measures the battery and ambient temperatures, and at temperatures below a predetermined threshold, controls the valves 11-14 for supply of heating medium from the hot storage tank 8, such that the battery 2 is pre-heated at the start of a charging cycle.

The cold storage reservoir 9 may comprise 50 l of water/glycol as a heat exchange fluid, that is cooled by the heat pump 10 to a temperature of -30°C. The heat pump 10 is a 6kW heat pump with a COP of 4 so that it can provide a cooling power of 24kW.

During a first peak charging time t_{pc} of typically 3 min, the controller 6 controls the charging unit 5 to supply 500kW of power to the battery 2. At this charging power, about 10 % of the power that is supplied to the battery 2 is lost to heat, amounting to 2.5kWh (9MJ) over the charging time of 3 min. This heat is cooled by the coolant from the cold storage tank 9. The cold storage tank 9 with a volume of 50 l of 50% glycol in water having a heat capacity Cp of 3.4kJ/kgK, heating up to 20°C removes 9MJ (2.5kWh) of heat.

After 3 minutes of fast charging, the controller 6 switches the charging unit 5 to charging at a power of 250 kW during a subsequent charging time t_{sc} of typically 7 minutes. At this power, about 5 % is lost to heat and 12.5kW need to be cooled during 7 minutes (1.4kWh). The controller 6 activates the heat pump 10 to cool the coolant in the cold reservoir 9, and the heat is removed from the battery by operation of the heat pump 10.

Over the total charging time t_{pc} + t_{sc} of 10 min, the battery 2 is charged with about 60kWh and requires 4kWh of cooling.

By the use of a heat pump 10 of 6kW and with a COP of 4, 24 kW, cooling power is available and removes 4 kWh of energy. This is sufficient for removing the 2.5kWh of heat during the peak charging time and the 1.4kWh during the subsequent charging time. The cold buffer of the cold storage tank 9 is required to provide adequate cooling under all ambient temperature conditions, and is required in moderate to warmer climates.

When the charging is completed after a total charging time t_{pc} + t_{sc} of 10 min, the vehicle 3 is detached form the electrical charging unit 5 and from the temperature control unit 7. The controller 6 controls the heat pump 10 and the cold storage tank 9 such that the heat pump 10 removes the heat from the coolant in the tank 9 and transports it to the hot storage tank 8 and/or to ambient until the coolant in the tank 9 returns to its operating temperature, for example -30°C.

Figure 2 shows a simulation of a charging power of 500 kW during the peak charging time t_{pc} of 180 s, and the subsequent charging power of 275 kW up to 600s. A total power of 500 kW was supplied while the core temperature of the battery remained at about 55°C. The coolant temperature was -10°C and the maximum cooling power was 32 kW, the battery being charged to a SOC of 90%.

In case the temperature of the battery 2 at the start of the charging cycle is low, the controller 6 activates the hot storage tank 8 to heat the battery 2 at the start of the charging cycle, or prior to the start if possible. For heating the battery from 0°C to 10°C, prior to charging, up to 2kWh is required. Supplying the heat exchange medium, which may comprise water, from the hot storage tank 8 at 60°C, at a flow rate of 30 l/min, results in a very rapid heating of the battery at a rate of up to 10°C/min .

## Claims

1. Method of charging an electric vehicle (3), comprising:
- providing an external charging unit (5) and an external cooling unit (7);
- connecting a battery power inlet (27) on the vehicle (3) to the charging unit (5) via a power cable (25);
- connecting a heat exchange connector (20,21) of a heat exchanger (22) of the vehicle (3) to the external cooling unit (7) via a heat exchange duct (15,16) ;
- supplying a cooling medium from a coolant tank (9) of the external cooling unit (7) to the vehicle (3) while providing a high level power input via the power cable (25) during a peak charging time interval t_{pc}; and
- supplying a cooling medium via a heat pump (10) to the heat exchange connector (20,21) while providing a second level power input via the power cable (25), that is lower than the first level during a subsequent charging time interval t_{sc} following on the peak charging time interval.

2. Method according to claim 1, wherein after completion of one or more charging cycles, the cooling medium in the coolant tank (9) is cooled by the heat pump (10).

3. Method according to claim 1 or 2, wherein the power supplied during the peak charging time interval t_{pc} is at least 300kW, preferably at least 500 kW, and the power supplied during the subsequent charging time interval t_{sc} is lower than 300kW.

4. Method according to claim 1, 2 or 3, wherein the cooling medium in the coolant tank (9) comprises a cooling power of at least 2.5 kWh, at a temperature of at least - 10°C, preferably at least -20°C, more preferably at least -30°C, which cooling is supplied during a peak charging time t_{pc} of 1 min < t_{pc} < 5 min.

5. Method according to claim 4, the cooling tank (9) comprising between 25 l and 500 I, preferably between 25 l and 100 l of water and cooling substance, such as glycol.

6. Method according to any of the preceding claims, wherein during the subsequent charging time interval t_{sc} of 2< t_{sc} <10 min, the heat pump (10) supplies a cooling power of at least 10 kW, preferably at least 20 kW.

7. Method according to any of the preceding claims, further comprising the step of providing a hot storage tank (9) in heat exchanging connection with the heat pump (10) and providing a heat exchange medium from the hot storage tank (9) to the heat exchange connector (20,21) when a battery temperature is below a predetermined threshold.

8. Charging station for charging an electric vehicle (3) comprising:
- an electric charging unit (5) with an electrical connector (25,26) for connecting to a battery (2) of an electric vehicle (3);
- a coolant connector (17,18) for connecting a cooling unit (7) to the cooling system (20,21,22) of the battery (2) of an electric vehicle (3); and
- a cooling unit (7) comprising a cold storage tank (9), a hot storage tank (8) and a heat pump (10), the hot and cold storage tanks (8,9) being connectable to the battery cooling system (20,21,22) via the coolant connector (17,18), the heat pump (10) being connected to the each storage tank (8,9) and arranged to transfer heat from the cold storage tank (9) to the hot storage tank (8).

9. Charging station according to claim 8, the cold storage tank (9) comprising 10-1001 of cooling medium.

10. Charging station according to claim 8 or 9, comprising two electric charging units (5) each with an electrical cable (25) and a connector (26) adapted to supply a power of 250kW at 400V.

11. Charging station according to any of claims 8-10, comprising a control unit (6) adapted for:
- supplying a cooling medium from the cold storage tank (9) to a heat exchange unit (22) of the vehicle (3) while providing a high level of power via the electrical cable (25) during a peak charging time interval t_{pc};
- supplying a cooling medium from the heat pump (10) to the heat exchange unit (22) of the vehicle while providing a second level of power via the electrical cable (25) that is lower than the first level during a subsequent charging interval t_{sc} following on the peak charging time interval; and
- cooling of the cooling medium in the cold storage tank (9) after completion of one or more charging cycles by the heat pump (10).

12. Charging station according to any of claims 8-11, comprising a hot storage tank (9) in heat exchanging connection with the heat pump (10) for providing a heat exchange medium from the hot storage tank (9) to the heat exchange connector (20,21) when a battery temperature is below a predetermined threshold.
